# EUROPEAN PATENT APPLICATION

(11) **EP 0 931 598 A1**
(43) Date of publication of application: **28.07.1999**
(21) Application number: 99200042.2
(22) Date of filing: 08.01.1999
(51) Int. Cl.: B08B 1/00

(54) **An accessory for cleaning the nut chamber of a fastening element of a farming machine or the like**

(30) Priority: 14.01.1998 NL 1008025
(71) Applicant: Kverneland Nieuw-Vennep B.V., 2153 LR Nieuw-Vennep (NL)
(72) Inventor: Vissers, Hermanus Hendrik, 2451 ZS Leimuiden (NL); Heemskerk, Johannes Wilhelmus Cornelis, 2154 MK Burgerveen (NL)
(74) Representative: de Vries, Johannes Hendrik Fokke

(57) **Abstract**

An accessory for cleaning the nut chamber of a fastening element of a farming machine or the like comprises an accessory body (7), which can be driven to rotate about a longitudinal axis, and which comprises a supporting surface (12) at one end, which can mate with the nut (4) which is accommodated in the nut chamber (5). The accessory furthermore comprises a number of scraping elements (15), which scraping elements are disposed in circumferentially spaced-apart relationship on said supporting surface and which project from said supporting surface.

## Description

The invention relates to an accessory for cleaning the nut chamber of a fastening element of a farming machine or the like.

Farming machines, for example multidisc rotary mowers, comprise various parts, such as blades, which must be detached regularly for maintenance and replacement. In order to prevent damage to the bolts/nuts by means of which said parts are mounted caused by the relatively rough operating conditions, it is usual to accommodate the nut or the bolt head in a nut chamber of a fastening element, so that the nut or the bolt head will be protected against being damaged. Naturally, there must be sufficient space round the nut in the nut chamber to make it possible to unscrew the nut by means of a tool. Dirt will accumulate in said space during operation, which makes it is necessary to clean said space first before the nut can be unscrewed. So far, a suitable accessory for carrying out this cleaning operation is not available, and said cleaning is carried out by means of a screwdriver or the like, for example.

The objective of the invention is to provide an accessory of the kind referred to in the introduction, by means of which the cleaning of the nut chamber can be carried out quickly and easily.

In order to accomplish that objective, the accessory according to the invention is characterized by an accessory body, which can be driven to rotate about a longitudinal axis, and which comprises a supporting surface at one end, which can mate with the nut which is accommodated in the nut chamber, and by a number of scraping elements, which scraping elements are disposed in circumferentially spaced-apart relationship on said supporting surface and which project from said supporting surface.

By rotating the accessory body, the scraping elements loosen the dirt which has accumulated in the nut chamber, so that the nut becomes readily accessible to a tool. The accessory can easily be driven by means of a power drill or the like, for example, which will generally be available already.

According to the invention, said supporting surface is preferably a conical surface, the apex of which lies on the longitudinal axis, whereby it is advantageous if the supporting surface is surrounded by a cylindrical edge, whose diameter is smaller than that of the nut chamber. Thus, the space above the nut is adequately sealed, so that no dirt can penetrate into said space.

According to a preferred embodiment, the outer wall of the cylindrical edge joins the outer wall of a cylindrical end portion of the accessory body, wherein said scraping elements substantially abut against said outer wall, and wherein said scraping elements are mounted in a portion having a larger diameter contiguous to said cylindrical end portion. In this manner it is achieved that, seen in circumferential direction, there is some clearance between the outer wall of the cylindrical end portion and the upper side of the nut chamber between the successive scraping elements, so that the loosened dirt can easily exit.

The invention will be explained in more detail hereafter with reference to the drawing, which schematically shows an embodiment of the accessory according to the invention.
Fig. 1 is a schematic sectional view of a part of a cutting disc of a multidisc rotary mower.
Fig. 2 is a bottom view of the accessory of Fig. 1.
Fig. 3 only shows the upper part of a variant of the accessory according to the invention.

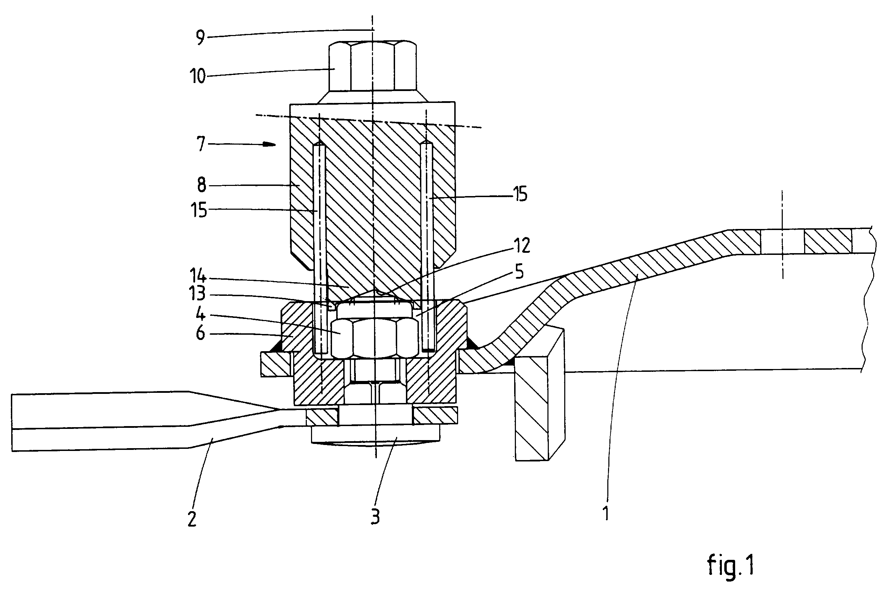

Fig. 1 shows by way of example a part of a cutting disc 1 of a multidisc rotary mower which is known per se and which will not be discussed in more detail herein. Said cutting disc 1 is provided with a plurality of circumferentially spaced blades 2, one of which is shown in Fig. 1. Each blade 2 is detachably connected to mowing disc 1 by means of a bolt 3 and a nut 4, with the nut being recessed in a nut chamber 5 of a fastening element 5 which is mounted on the mowing disc. Blade 2 can rotate about the shank of bolt 3 in a usual manner.

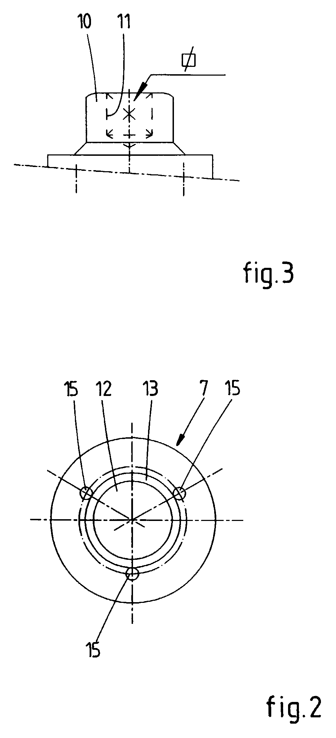

When blade 2 is to be detached and replaced, nut 4 must be removed from bolt 3. Usually, nut chamber 5 will be entirely filled with dirt and the like, so that the nut chamber must be cleaned first. According to the invention, an accessory 7 is used for this purpose, which accessory comprises an accessory body 8, which is made of nylon, for example, and which can be driven to rotate about a longitudinal axis 9. To this end, said accessory is fitted with a coupling element 10 at one end, in the form of a hexagonal M12 in Fig. 1, by means of which the accessory can be coupled to a power drill, for example. As is shown in Fig. 3, it is also possible to use another type of coupling element 10, of course, which for example has a square hole 11.

At the other end, accessory body 8 comprises a supporting surface 12, in the form of a conical surface in the illustrated embodiment, the apex of which lies on longitudinal axis 9, and the apex angle of which is preferably 140°. Supporting surface 12 is surrounded by a cylindrical edge 13, the inside wall of which joins conical surface 12 and the outside wall of which joins the outside wall of a cylindrical end portion 14 of accessory body 8. Cylindrical edge 13, which surrounds the upper side of nut 4, has a smaller diameter than the nut chamber.

Accessory 7 is furthermore provided with a number or scraping elements 15, which scraping elements are circumferentially spaced over supporting surface 12, and which project in axial direction with respect to said supporting surface. In the illustrated embodiment, three scraping elements 15 are disposed a uniform distance apart on the circumference of supporting surface 12. As is apparent from the bottom view of Fig. 2, scraping elements 15 abut against the outside wall of cylindrical end portion 14. The scraping elements are mounted in the upper part of accessory body 8, whose diameter is larger than that of cylindrical end portion 14.

Scraping elements 15, which are made of spring steel in the form of axially extending pins in the illustrated embodiment, project with respect to supporting surface 12, by a length which is smaller than the depth of the nut chamber. As a result of this, the scraping elements 15 will remain clear of the bottom of nut chamber 5 when accessory 7 is supported on the upper side of the nut. Unnecessary wear of scraping elements 15 and nut chamber 5, respectively, is avoided in this manner. It is noted that at least the projecting part of the pins may also include an angle with the direction in which the longitudinal axis extends, if desired.

Seen in circumferential direction, a circular clearance is present between the successive scraping elements 15, between the outer wall of cylindrical edge 13 and end portion 14 and the inner wall of nut chamber 5 or the upper side of fastening element 6. As a result of this, the dirt which is loosened from nut chamber 5 by scraping elements 15 can easily exit.

When nut 4 is to be removed, accessory 7 is pressed onto the upper side of nut 4 with its conical supporting surface 12, and accessory 7 can be rotated by means of a power drill, for example, as a result of which scraping elements 15 will remove the dirt that has collected in nut chamber 5 in use. As already said before, said dirt can be discharged to the outside more easily due to the clearance which is present between scraping elements 15 and accessory 7 on the one hand and fastening part 6 on the other hand.

The invention is not limited to the above-described embodiment, which can be varied in several ways within the scope of the claims.

## Claims

1. Accessory for cleaning the nut chamber of a fastening element of a farming machine or the like, characterized by an accessory body, which can be driven to rotate about a longitudinal axis, and which comprises a supporting surface at one end, which can mate with the nut which is accommodated in the nut chamber, and by a number of scraping elements, which scraping elements are disposed in circumferentially spaced-apart relationship on said supporting surface and which project from said supporting surface.

2. Accessory according to claim 1, wherein said supporting surface is a conical surface, the apex of which lies on the longitudinal axis.

3. Accessory according to claim 1 or 2, wherein said supporting surface is surrounded by a cylindrical edge, whose diameter is smaller than that of the nut chamber.

4. Accessory according to claim 3, wherein the outer wall of the cylindrical edge joins the outer wall of a cylindrical end portion of the accessory body, wherein said scraping elements substantially abut against said outer wall, and wherein said scraping elements are mounted in a portion having a larger diameter contiguous to said cylindrical end portion.

5. Accessory according to any one of the preceding claims, wherein said scraping elements project with respect to said supporting surface, by a length which is smaller than the depth of the nut chamber.

6. Accessory according to any one of the preceding claims, wherein said scraping elements are axially extending pins.

7. Accessory according to any one of the claims 1 - 5, wherein said scraping elements are pins, at least the projecting parts of which include an angle with said longitudinal axis.

8. Accessory according to any one of the preceding claims, wherein the accessory body comprises a coupling element on the end positioned opposite said supporting surface, which functions to couple said accessory to a drive unit.

9. Accessory according to any one of the preceding claims, wherein said accessory body is made of plastic material, in particular nylon, and wherein said scraping elements are preferably made of spring steel.

10. Accessory according to claim 2, wherein the apex angle of said conical surface is at least approximately 140°.
